# EUROPÄISCHE PATENTSCHRIFT

(11) **EP 2 620 660 B1**
(45) Veröffentlichungstag und Bekanntmachung des Hinweises auf die Patenterteilung: **22.10.2014**
(21) Anmeldenummer: 13152328.4
(22) Anmeldetag: 23.01.2013
(51) Int. Cl.: F16C 11/10

(54) **Kugelspannvorrichtung mit einer Pneumatik-Drehdurchführung**
Ball-clamping device with rotary pneumatic feed-through
Dispositif de serrage à bille avec un passage tournant pneumatique

(30) Priorität: 30.01.2012 DE 102012100714
(43) Veröffentlichungstag der Anmeldung: 31.07.2013
(73) Patentinhaber: Gutjahr GmbH, 73240 Wendlingen (DE)
(72) Erfinder: Gutjahr, Martin, 72669 Unterensingen (DE); Rosiuta, Vasile, 73240 Wendlingen (DE); Gutjahr, Hermann, 73240 Wendlingen (DE)
(74) Vertreter: Kohler Schmid Möbus

(56) Entgegenhaltungen:
- DE-A1- 10 237 081
- DE-U1- 29 511 899
- DE-U1- 29 511 900
- FR-A1- 2 896 402
- US-A1- 2002 012 566
- US-A1- 2002 014 567

## Beschreibung

Die Erfindung betrifft eine Kugelspannvorrichtung mit einer Kugel, die zwischen zwei mittels eines Aktuators relativ zueinander bewegbaren Lagerpfannen drehbar gelagert und festspannbar ist, wobei die Kugel einen Angriffspunkt zur exzentrischen Befestigung eines Montagekörpers sowie ein Drehlager aufweist, in welchem ein Entlastungsarm einer krafterzeugenden Einrichtung drehbar gelagert ist, um ein am Angriffspunkt auf die Kugel wirkendes Drehmoment des Montagekörpers zumindest teilweise zu kompensieren.

Eine solche Kugelspannvorrichtung mit pneumatischer Gewichtsentlastung ist beispielsweise aus der DE 102 37 081 A1 bekannt.

Diese bekannte Kugelspannvorrichtung dient dazu, den am Montagearm der Kugel befestigten Montagekörper mithilfe der Kugel räumlich beliebig zu orientieren, um dann Arbeiten am Montagekörper, die nur oder einfacher in bestimmten Winkelpositionen erfolgen können, zu erleichtern. Bei dem Montagekörper kann es sich beispielsweise um einen zu beziehenden Autositz handeln. Die pneumatische Gewichtsentlastung dient dazu, das vom Montagekörper auf die Kugel ausgeübte Drehmoment zu kompensieren und dadurch die vom Bedienpersonal zum Drehen des Montagekörpers aufzubringende Kraft zu verringern. Der am Montagearm befestigte Montagekörper kann über einen Spiralschlauch mit Druckluft versorgt werden. Allerdings ist durch den Spiralschlauch die freie Drehbarkeit des Montagekörpers eingeschränkt und besteht stets die Gefahr, dass beim Drehen des Montagekörpers der Spiralschlauch an der Kugelspannvorrichtung aufgewickelt und dadurch zerstört wird.

Aufgabe der vorliegenden Erfindung ist es demgegenüber, bei einer Kugelspannvorrichtung der eingangs genannten Art die Zuführung von Druckluft an den Montagekörpers zu vereinfachen.

Diese Aufgabe wird erfindungsgemäß dadurch gelöst, dass das Drehlager durch eine Drehdurchführung mit einer abgedichteten Drehdurchführungskammer gebildet ist, in die ein im Entlastungsarm verlaufender erster Fluidkanal mündet und von der ein in der Kugel verlaufender zweiter Fluidkanal abgeht.

Erfindungsgemäß wird das innen im Entlastungsarm zugeführte Fluid, wie z.B. Druckluft, über die Drehdurchführung in die Kugel und von dort weiter zum Montagekörper geleitet.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die Erfindung ist in der Zeichnung dargestellt und wird anhand eines Ausführungsbeispiels näher erläutert. Es zeigen:

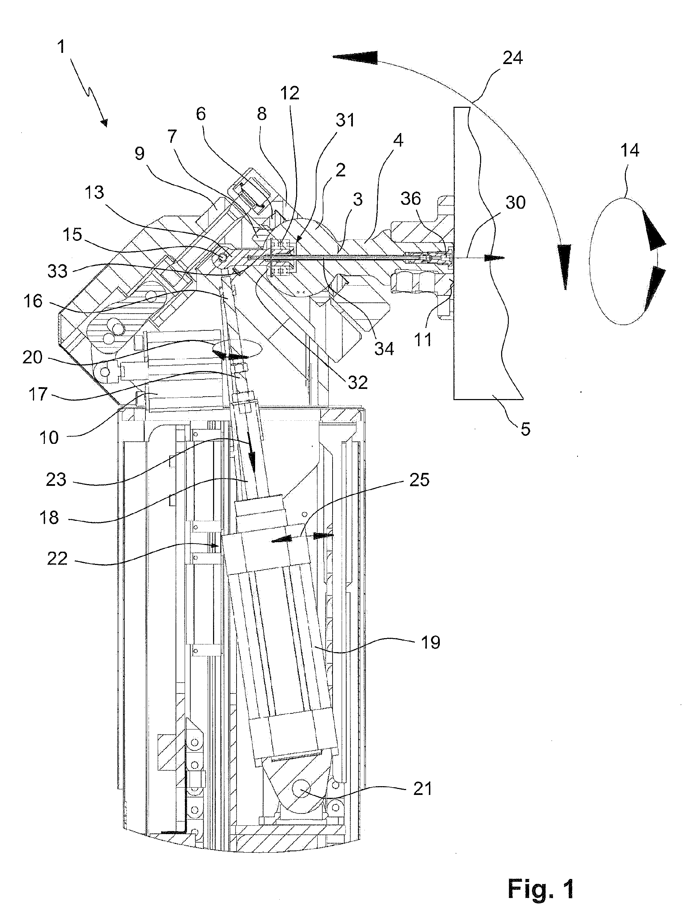

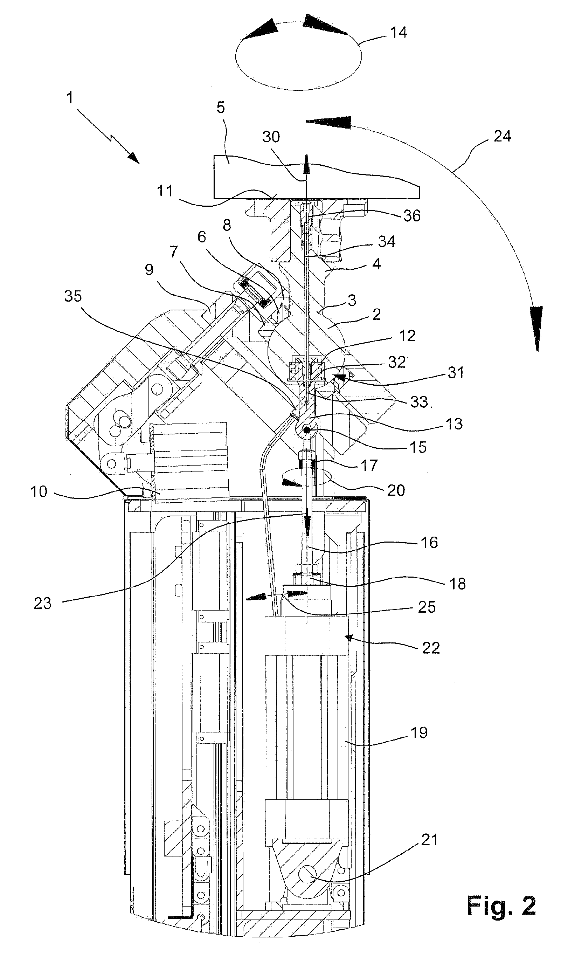

- Fign. 1, 2: die erfindungsgemäße Kugelspannvorrichtung mit Pneumatik-Drehdurchführung bei waagerecht ausgerichtetem Montagearm (Fig. 1) und bei senkrecht ausgerichtetem Montagearm (Fig. 2).

In **Fign. 1** **und** **2** ist die Kugelspannvorrichtung **1** in einer waagrechten und in einer senkrechten Verschwenkposition einer Kugel **2** gezeigt. An einem Angriffspunkt 3 der Kugel 2 steht ein Montagearm **4** radial ab, an dem ein schematisch angedeuteter Montagekörper **5** befestigt ist. Die Kugel 2 wird von zwei Lagerpfannen **6, 7** gehalten, die jeweils in einer beweglichen Lagerscheibe **8** und einer ortsfesten, d.h. gehäusefesten Lagerscheibe **9** eingefasst sind. Die bewegliche Lagerscheibe 8 kann in Richtung auf die ortsfeste Lagerscheibe 9 in hier nicht näher ausgeführter Weise durch einen pneumatischen Aktuator **10** verschoben werden, um die Kugel 2 entweder für eine beliebige Rotation um ihre drei Freiheitsgrade freizugeben oder in ihrer jeweiligen Drehposition festzuspannen. An seinem freien Ende weist der Montagearm 4 eine Montageschnittstelle (Flansch) **11** zur Befestigung des Montagekörpers 5 auf.

Dem Montagearm 3 gegenüberliegend weist die Kugel 2 ein Drehlager (Radiallager) **12** auf, in welchem ein Entlastungsarm **13** drehbar gelagert ist. D.h., eine Rotation der Kugel 2 um die Längsachse des Montagearms 4, also in Pfeilrichtung **14**, kann unabhängig vom Entlastungsarm 13 erfolgen. Der Entlastungsarms 13 ist anderenends bei **15** an einer Zugstange **16** angelenkt, die über ein weiteres Drehlager (Radiallager) **17** mit einem Kolben **18** eines Pneumatikzylinders **19** verbunden sein kann. Das weitere Drehlager 17 gestattet eine Rotationsbewegung der Zugstange 16 um ihre Längsachse (Doppelpfeil **20**), ohne dass der Kolben 18 dieser Rotation folgen müsste. Am anderen Ende ist der Pneumatikzylinder 19 an einem gehäusefesten Kugelgelenk **21** befestigt. Der Kolben 18 und der Pneumatikzylinder 19 sind insgesamt als krafterzeugende Einrichtung ("pneumatische Gewichtsentlastung") **22** bezeichnet, über die eine einstellbare Zugkraft in Pfeilrichtung **23** auf die Zugstange 16 ausgeübt werden kann, um das vom Montagekörper 5 auf die Kugel 2 ausgeübte Drehmoment vollständig zu kompensieren. Dadurch verschwenkt trotz des montierten Montagekörpers 5 die Kugel 2 im freigegebenen Zustand der Lagerpfannen 6, 7 nicht. Die gezeigte Gewichtsentlastung ist so ausgestaltet, dass sie eine beliebige Verdrehung und Verschwenkung der Kugel 2 tolerieren kann.

Eine Rotation des Montagearms 4 um seine Längsachse in Pfeilrichtung 14 erfordert auf Grund der Lagerung des Entlastungsarms 13 im Drehlager 12 der Kugel 2 keine Bewegung von Entlastungsarm 13, Zugstange 16 oder Kolben 18. Eine Verschwenkung des Montagearms 4 in Pfeilrichtung **24** oder aus der Betrachtungsebene heraus wird vom Kugelgelenk 21 (Doppelpfeil **25**) und vom weiteren Drehlager 17 aufgenommen. Durch das Zusammenwirken der verschiedenen Freiheitsgrade der pneumatische Gewichtsentlastung 22, insbesondere der Rotierbarkeit des Entlastungsarms 13 in der Kugel 2, der Anlenkung der Zugstange 16 am Entlastungsarm 13, der Rotierbarkeit der Zugstange 16 um ihre Längsachse gegenüber dem Kolben 18 sowie der Verschwenkbarkeit des Pneumatikzylinders 19 um das Kugelgelenk 21, können beliebige Orientierungen und Bewegungen der Kugel 2 und des an ihr montierten Montagekörpers 5 von der Entlastungsmechanik verfolgt werden.

Um den am Montagearm 3 befestigten Montagekörper 5 mit Druckluft (Pfeil **30**) zu versorgen, ist das Radiallager 12 der Kugel 2 durch eine Drehdurchführung **31** mit einer abgedichteten Drehdurchführungskammer **32** gebildet, in die ein im Entlastungsarm 13 verlaufender erster Druckluftkanal **33** mündet und von der ein in der Kugel 2 und im Montagearm 4 verlaufender zweiter Druckluftkanal **34** abgeht. Der Entlastungsarm 13 weist einen Druckluftanschluss **35** (Fig. 2) auf, von dem der erste Druckluftkanal 33 abgeht. Der zweite Druckluftkanal 34 erstreckt sich im Montagearm 3 bis zur Montageschnittstelle 11 und weist an der Montageschnittstelle 11 eine Schnellkupplung **36** auf, die sich durch einen Stecknippel eines montagekörperseitigen Gegensteckers verbinden und lösen lässt. Im abgekuppelten Zustand ist in der Schnellkupplung 36 der Druckluftdurchfluss automatisch gesperrt.

## Patentansprüche

1. Kugelspannvorrichtung (1) mit einer Kugel (2), die zwischen zwei mittels eines Aktuators (10) relativ zueinander bewegbaren Lagerpfannen (6, 7) drehbar gelagert und festspannbar ist, wobei die Kugel (2) einen Angriffspunkt (3) zur exzentrischen Befestigung eines Montagekörpers (5) sowie ein Drehlager (12) aufweist, in welchem ein Entlastungsarm (13) einer krafterzeugenden Einrichtung (22) drehbar gelagert ist, um ein am Angriffspunkt (3) auf die Kugel (2) wirkendes Drehmoment des Montagekörpers (5) zumindest teilweise zu kompensieren,
**dadurch gekennzeichnet,**
**dass** das Drehlager (12) durch eine Drehdurchführung (31) mit einer abgedichteten Drehdurchführungskammer (32) gebildet ist, in die ein im Entlastungsarm (13) verlaufender erster Fluidkanal (33) mündet und von der ein in der Kugel (2) verlaufender zweiter Fluidkanal (34) abgeht.

2. Kugelspannvorrichtung nach Anspruch 1, **dadurch gekennzeichnet, dass** die Kugel (2) am Angriffspunkt (3) einen Montagearm (4) mit einer Montageschnittstelle (11) zur Befestigung des Montagekörpers (5) aufweist und dass der zweite Fluidkanal (34) sich im Montagearm (4) bis zur Montageschnittstelle (11) erstreckt.

3. Kugelspannvorrichtung nach Anspruch 1 oder 2, **dadurch gekennzeichnet, dass** der zweite Fluidkanal (34) eine Schnellkupplung (36) aufweist.

4. Kugelspannvorrichtung nach einem der vorhergehenden Ansprüche, **dadurch gekennzeichnet, dass** der Entlastungsarm (13) einen Fluidanschluss (35) aufweist, von dem der erste Fluidkanal (33) abgeht.

## Claims

1. Ball clamping device (1) having a ball (2) which is rotatably supported and can be securely clamped between two bearing cups (6, 7) which can be moved relative to each other by means of an actuator (10), the ball (2) having an engagement location (3) for the eccentric securing of an assembly member (5) and a rotary bearing (12), in which a balancing arm (13) of a force-producing device (22) is rotatably supported in order to at least partially compensate for a torque of the assembly member (2) acting at the engagement location (3) on the ball (2),
**characterised in that**
the rotary bearing (12) is formed by means of a rotary feedthrough (31) having a sealed rotary feedthrough chamber (32), in which a first fluid channel (33) which extends in the balancing arm (13) opens and from which a second fluid channel (34) which extends in the ball (2) starts.

2. Ball clamping device according to claim 1, **characterised in that** the ball (2) has at the engagement location (3) an assembly arm (4) having an assembly interface (11) for securing the assembly member (5) and **in that** the second fluid channel (34) extends in the assembly arm (4) as far as the assembly interface (11).

3. Ball clamping device according to claim 1 or claim 2, **characterised in that** the second fluid channel (34) has a rapid coupling (36).

4. Ball clamping device according to any one of the preceding claims, **characterised in that** the balancing arm (13) has a fluid connection (35) from which the first fluid channel (33) starts.

## Revendications

1. Dispositif de serrage (1) à bille, muni d'une bille (2) qui est montée à rotation et peut être bloquée à demeure entre deux cuvettes de palier (6, 7) pouvant être mues l'une par rapport à l'autre au moyen d'un actionneur (10), ladite bille (2) comprenant un point d'application (3), en vue de la fixation excentrée d'un corps de montage (5), ainsi qu'un coussinet de rotation (12) dans lequel un bras de délestage (13) d'un système (22) générateur de forces est monté rotatif afin de compenser, au moins en partie, un couple de rotation dudit corps de montage (5) agissant sur ladite bille (2) au niveau dudit point d'application (3),
**caractérisé par le fait**
**que** le coussinet de rotation (12) est constitué d'une traversée rotative (31) dotée d'une chambre (32) dont l'étanchéité est assurée, dans laquelle débouche un premier canal à fluide (33) s'étendant dans le bras de délestage (13), et dont part un second canal à fluide (34) s'étendant dans la bille (2).

2. Dispositif de serrage à bille, selon la revendication 1, **caractérisé par le fait que** la bille (2) comporte, au niveau du point d'application (3), un bras de montage (4) muni d'un interface de montage (11) en vue de la fixation du corps de montage (5) ; et **par le fait que** le second canal à fluide (34) s'étend dans ledit bras de montage (4), jusqu'à l'interface de montage (11).

3. Dispositif de serrage à bille, selon la revendication 1 ou 2, **caractérisé par le fait que** le second canal à fluide (34) est pourvu d'un accouplement rapide (36).

4. Dispositif de serrage à bille, selon l'une des revendications précédentes, **caractérisé par le fait que** le bras de délestage (13) présente un raccord de fluide (35), dont part le premier canal à fluide (33).
